# EUROPEAN PATENT APPLICATION

(11) **EP 2 921 726 A1**
(43) Date of publication of application: **23.09.2015**
(21) Application number: 14160509.7
(22) Date of filing: 18.03.2014
(51) Int. Cl.: F16C 9/02, F16C 9/04, F16C 17/00

(54) **Friction minimized sliding bearing arrangement**

(71) Applicant: ThyssenKrupp Metalúrgica Campo Limpo Ltda., 13231- 900 Campo Limpo Paulista SP (BR)
(72) Inventor: Fonseca Galli, Luis Antonio, 13106-006 Sousas - Campinas -SP (BR); de Souza Rodrigues, Alex, 13211-407 Jd Santa Teresa - Jundiaí - SP (BR); Stuani Alves, Diogo, 13084-767 Barao Geraldo - Campinas - SP (BR)
(74) Representative: Braun-Dullaeus Pannen Patent- und Rechtsanwälte

(57) **Abstract**

The present invention relates to a sliding bearing arrangement (1) for supporting a shaft (10) in a support element (11), comprising an inner bearing part (12) with a sliding surface (13) and comprising an outer bearing part (14) with a sliding surface (15), whereas when the shaft (10) is rotating around an axis (16), the sliding surface (13) of the inner bearing part (12) performs a sliding movement relative to the sliding surface (15) of the outer bearing part (14). According to the invention, at least one of the sliding surfaces (13, 15) features at least one recess area (17) which is extending in a circumferential direction of the surface (13, 15) over a circumferential angle (α1, α2) and which is extending over at least 50% of the axial length of the sliding surface (13, 15), and the recess area (17) is dimensioned in such a way that over the recess area (17) the clearance distance between the inner bearing part (12) and the outer bearing part (14) is increased.

## Description

The present invention relates to a sliding bearing arrangement for supporting a shaft in a support element, comprising an inner bearing part with a sliding surface and comprising an outer bearing part with a sliding surface, whereas when the shaft is rotating around a rotation axis, the sliding surface of the inner bearing part performs a sliding movement in contact against the sliding surface of the outer bearing part.

### PRIOR ART

FR 2 847 314 A1 teaches chamfers in the surfaces of bearing journals in a crank drive in order to provide a stress discharge in the crank shaft of an internal combustion machine. The chamfers are performed score-like and are positioned neighboring to the transition of the cylindrical bearing journal into the crank web. The positions of the chamfers are determined by computer-numerical calculations based on the parameters of the crank shaft of the engine, and the maximum stresses in the connecting zone between the bearing journal and the crank web can be reduced. The friction of the crank drive with bearing journals featuring score-like chamfers in the surface of the bearing journals cannot be reduced, and thus the minimization of friction is not taught within the disclosure.

EP 2 636 914 A1 discloses a sliding bearing with a bearing surface featuring convexo-concave portions which are respectively formed in the center portion and the end portions of the bearing surface, and the average height of vertexes of convex portions in the center portion is set smaller than the average height of vertexes of convex portions in the end portions. This surface design leads to the improvement of common formability and an increase in a load capacity in the end portions. Consequently, it is possible to attain a reduction in friction without sacrificing the conformability and the load capacity.

In order to reduce friction in sliding bearings, JP 2005 069 249 A teaches a hard carbon coating on at least one of the bearing surfaces, and the coating is applied by a DLC-thin film coating. The sliding bearing according to the embodiment is a bearing within a crank drive. But the achievable reduction of friction is limited to a few percent, and coatings are often not fatigue endurable over a longer lifetime of a crank drive.

### DISCLOSURE OF INVENTION

Thus, the invention has the objective to improve reduction in friction of a sliding bearing arrangement. In particular the object is to reduce the amount of friction under sustaining a high load capacity of the sliding bearing arrangement which preferably is stressed by a time-varying load over the rotary movement.

This objective is achieved by a sliding bearing arrangement as taught by claim 1 of the present invention. Preferred embodiments of the invention are defined by the sub-claims.

The invention provides that at least one of the sliding surfaces of the sliding bearing arrangement features at least one recess area which is extending in a circumferential direction of the surface over a circumferential angle and which is extending over at least 50% of the axial length of the sliding surface, and the recess area is dimensioned in such a way that over the recess area the oil film distance between the inner bearing part and the outer bearing part is increased.

When at least one recess area is applied in the sliding surface of at least one of the generally cylindrical bearing partners, namely the inner bearing part or the outer bearing part, at least one bearing part features a portion of material not present on the surface of the cylindrical part. This leads to the fact that a reduced hydrodynamic pressure is generated over the recess area compared to the hydrodynamic pressure next to the recess area forming the increased clearance.

According to a preferred embodiment the recess area forms a circumferential section of the bearing part with a reduced radius, but the ground surface in the recess area can be formed cylindrical as well as the untreated, original surface of the bearing part, and in this area of a reduced radius the hydrodynamic pressure is reduced or eliminated. As an advantage, the circumferential section of the recess area has the same width with regard to the rotary axis relating to the width of the untreated surface of the bearing part. Thus, the recess area can be applied in the surface of the inner bearing part and/or the outer bearing part of the sliding bearing arrangement, e.g. in the shaft surface or in the bore surface of the support element.

The recess area leads to a reduction or to an elimination of the hydrodynamic pressure from the sliding parts, in particular the outer bearing part and the inner bearing part, by increasing the clearance which leads to a decrease of the power loss which is induced by the sliding movement in the tribological system.

Within the spirit of the invention the surface of the at least one bearing part can be formed by the cylindrical outer surface of the inner bearing part, e.g. formed by a section of the shaft itself. And in the same way the invention also encloses the possibility of at least one recess area in the inner surface of the outer bearing part, e.g. formed by a bore of the support element itself or by a bearing shell insert within the support element. A recess area in the outer bearing part leads to the same effect of extinguishing the hydrodynamic pressure from the bearing partner as a recess area does, which is applied in the surface of the inner bearing part. Both recess areas lead to the reduction of friction according to the invention due to a sectional interruption of the tribological arrangement of two siding partners and a lubricant in between.

The sliding bearing arrangement is performed to transmit a time varying load between the shaft and the support element while the shaft rotates. The time varying load describes a load induced by a force between the shaft and the support element, which changes in the direction with regard to the rotary axis and preferably which also changes in the amount. Thus, the recess regions are defined in positions where the time varying load does not lead to a high hydrodynamic pressure between the opposing surfaces sliding onto each other.

According to another embodiment of the invention at least one of the surfaces can feature coatings, texturing like dimples and/or can be treated or protected to allow a good lubrication under working phases, which reduces wear effects inside the material absence areas and on the sliding surface.

The recesses in the surfaces can comprise recesses in all radial directions on the circumference with respect to the rotary axis, and as another positive effect the recesses can reduce the incidence of stress concentration regions.

The bearing parts extend in an axial direction according to the rotary axis of the shaft, whereas at least one recess area is applied substantially over the entire axial length of the cylindrical bearing part. In order to optimize the reduction of friction, it is proposed to design the recess areas as wide as the axial length of the bearing part or, respectively, at least approximately as wide as the axial length of the bearing part. The width of the recess area in the axial direction may amount at least 60%, preferred at least 80%, more preferred at least 90% and most preferred at least 95% of the total axial length of the sliding surface.

According to another improved embodiment in at least one of the surfaces of the bearing parts are arranged two recess areas, in particular opposing or nearly opposing to each other. The recess areas in one bearing part surface can feature the same or different dimensions, depending on the dynamic force situation of the single bearing part and each position and dimension of the recess areas can be adapted to the local force and stress situation of the single bearing part.

In order to reduce or to eliminate the hydrodynamic pressure between the sliding surfaces of the bearing, it is sufficient to keep the depth of the recess in the surface of the bearing part as small as possible, but the extinguishing of the hydrodynamic pressure must be ensured. On the other hand, stiffness and load capacity impact should be considered. Bearing part strength is inversely proportional to recess depth, in particular weakening the shaft, which is affected in its stiffness and load capacity. Accordingly, the at least one recess area in the bearing journal surface can feature a depth of at least or about 0,05 mm and preferably of at least or about 0,1 mm.

In particular, when the sliding bearing part is applied in a crank drive of heavy duty internal combustion engines it must feature a high torsional stiffness, and in these applications where a higher crank shaft performance is needed, for instance in heavy duty engines, the decrease of torsional stiffness can be a critical point for the component failure. Thus, it is proposed to design the recess areas as micro profiles of about 0,1 mm or a few 100 microns, which already lead to an extinguishing of the hydrodynamic pressure between the sliding partners of the bearings.

According to another preferred embodiment of the present invention the circumferential directed transition of the recess areas into the untreated, original surface of the inner or outer bearing part may feature a sequence of radii. The material absence region forming the recess area, which comprises the sequence of radii on the edges of the recess area allow a reduction of stress concentrations in the material near under the surface of the bearing part, whereas said stress concentrations need to be avoided.

Alternatively the at least one recess area is formed by an area of a continuous varying radius of the inner bearing part or of the outer bearing part, whereas the recess area formed by the area of a continuous varying radius preferably leads to an elliptic shape of the inner bearing part or the outer bearing part. According to this variant of forming the recess the radius may transfer from a minimum to a maximum value, and the minimum value of the radius defines the depth of the recess and the maximum radius defines the unaffected perimeter of the bearing part. The circumferential transition from the original surface into the recess is formed by the transiting radius, and a transition edge is avoided. When the bearing part features two recesses which are positioned diametral to each other, the cross section of the inner or outer bearing part forms an elliptic shape. With this elliptic shape the advantage is achieved that the wedge effect for a hydrodynamic pumping of oil into the lubrication gap can be substantially improved.

Bearing parts which are applied in a mechanical device in particular for supporting a shaft in a support element can be stressed by a time varying load over the revolution of the shaft, whereas the load can stress the bearing parts from different directions and with a varying force value. For example, crank drives feature sliding bearing arrangements with high pressure load areas and low pressure load areas with respect to the circumference. A low load area leads to a zone with a low hydrodynamic pressure and a high load area leads to a zone with a high hydrodynamic pressure. Accordingly, the at least one recess area is positioned lateral to the high pressure load area, because in the recess area, where the hydrodynamic pressure is reduced or eliminated, the bearing has no load capacity. In particular bearing journals of a crank shaft feature two main pressure load areas, which are determined by the varying mechanical stress over the full cycle of an internal combustion engine.

According to the above, as a preferred embodiment of the invention at least one of the surfaces features a pressure load area performed for transferring a force between the shaft and the support element, whereas the at least one recess area is located lateral to the pressure load area and/or the pressure load area is located in between two recess areas. The invention utilizes the typical load situation in a sliding bearing arrangement which is stressed by a radial load in one direction depending on a certain rotary position of the shaft, and the load direction defines a load pressure section and lateral to the load pressure section the bearing is, with respect to the circumference, nearly unstressed. The invention utilizes this low carrying capacity region over the circumference to apply a recess area on which no hydrodynamic force is generated. This recess region decreases the power loss due to friction, which arises in sharing work in the tribological system.

Due to the presence of high pressure load areas in the circumference of the bearing parts, the circumferential extension of at least one of the recess areas is limited. The circumferential extension can range from 20° to 120°, preferred from 30° to 110°, more preferred from 40° to 100° and most preferred from 50° to 95°, but the optimum circumferential extension is depending on the local stress situation of the bearing part and is depending on the kind of bearing part.

According to a preferred embodiment of the present invention, the shaft can form a crank shaft of a crank drive, in particular of an internal combustion engine, a compressor or a pump, whereas the inner bearing part is formed by a journal of the crank shaft. The journal of the crank shaft can form a main journal for supporting the crank shaft in a crank housing or the journal of the crank shaft forms a pin journal for connecting the crank shaft to a connecting rod. In the bearing journals of the crank shaft the recess areas may feature a circumferential extension of at least 20° to 120°, whereas the circumferential extensions of two or more recesses over the circumferential extension of one bearing journal can be different to each other.

Emanating from the time varying load, an average hydrodynamic pressure can be defined for points around the perimeter of the crank shaft and, based on the maximum average pressure, it could be determined percentages of this maximum average pressure and points which are below this value. These points, that represent a fraction of the shaft surface, could be neglected for the sliding bearing normal operation. From a maximum of e.g. 50% of maximum average pressure, one defines as preferential of 30% of maximum average pressure to determine the material absence points that will be not present on the shaft surface for forming the recess areas, allowing up to 42% of material absence regions over the entire circumference of the bearing journal of a crank shaft of a crank drive.

In a crank drive the high pressure load is generated mainly due to the gas pressure forces of the internal combustion, but as well due to another high pressure load based on inertia forces of the piston and the connecting rod, in particular close to the top dead center and/or the bottom dead center.

According to another embodiment the shaft can form a cam shaft of an internal combustion engine, a compressor or a pump, whereas the inner bearing part can be formed by a bearing ring of the cam shaft. The bearing ring can be arranged on the cam shaft or the bearing ring is a section of the cam shaft itself.

According to yet another embodiment the shaft can form a Lanchester balancer of an internal combustion engine, whereas the inner bearing part is formed by a bearing ring of the Lanchester balancer. The Lanchester Balancer forms a counter weight balancer for counter balancing the crank drive of an internal combustion engine.

### PREFFERED EMBODIMENT OF THE INVENTION

Additional details, characteristics and advantages of the subject of the invention are disclosed in the sub-claims and the following description of the respective figures, which show a preferred embodiment in an exemplary fashion of the subject matter according to the invention in conjunction with the accompanying figures, in which
- Figure 1: shows a cross sectioned side view of a sliding bearing arrangement which is embodied in a crank drive of an internal combustion engine,
- Figure 2a: shows an axial view of an inner bearing part which is embodied as a pin bearing journal of a crank drive with two recess areas applied in the surface,
- Figure 2b: shows a side view of the pin bearing journal according to figure 2a,
- Figure 3: shows an axial view of a sliding bearing arrangement with an inner bearing part and an outer bearing part, where the inner bearing part features two recess areas in the surface, formed by a continuous varying radius,
- Figure 4: shows another embodiment of inner bearing parts forming bearing rings on a cam shaft and
- Figure 5: shows yet another embodiment of inner bearing parts forming bearing rings on the shaft of a Lanchester balancer,

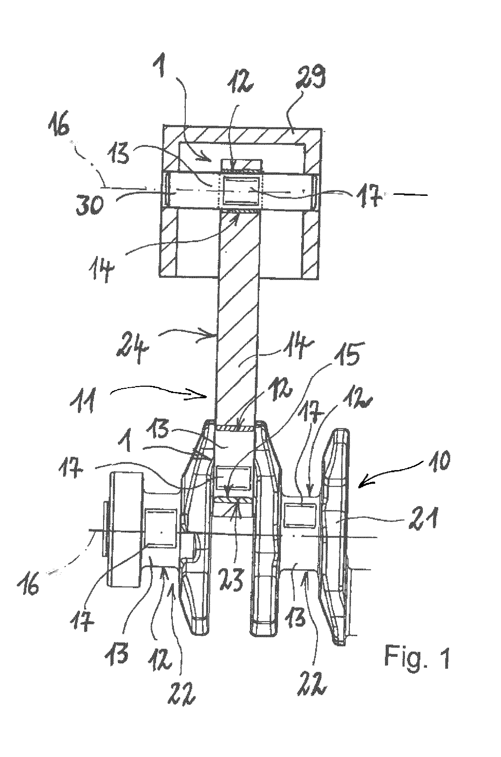

Figure 1 shows an embodiment of a sliding bearing arrangement 1 for supporting a shaft 10 in a support element 11, and the arrangement 1 comprises an inner bearing part 12 with a sliding surface 13 and an outer bearing part 14 with a sliding surface 15. The sliding bearing arrangement 1 is embodied as a bearing arrangement in a crank drive, and the shaft 10 forms a crank shaft 21, and thus the inner bearing part 12 forms a journal 23 of the crank shaft 21 and the outer bearing part 14 forms a connecting rod 24 for connecting the crank shaft 21 with a piston 29.

Next to the journal 23 for connecting the crank shaft 21 with the connecting rod 24, journals 22 are arranged to support the crank shaft 21 in a crank housing, what is nor shown in detail.

When the shaft 10 rotates in a rotary axis 16 the sliding surface 13 of the inner bearing part 12 performs a sliding movement relative to the sliding surface 15 of the outer bearing part 14, formed by the connecting rod 24 or e.g. as shown as in insert part of the connecting rod 24.

The journal 22 for supporting the crank shaft 21 in a crank housing and the journal 23 for connecting the crank shaft 21 to the connecting rod 24 feature at least one recess area 17 which is extending in a certain circumferential position of the surface 13 of the inner bearing part 12. In the same way, the journals 22 for supporting the crank shaft 21 in a crank housing feature recess areas 17 in the sliding surfaces 13.

The connection between the connecting rod 24 and the piston 29 comprises a piston pin 30, and the connection between the connecting rod 24 and the piston pin 30 forms another embodiment of a sliding bearing arrangement 1. In the sliding surface 13 a recess area 17 is applied, and the position of the recess area is arranged lateral to the direction of extension of the connecting rod 24.

The embodiment according to figure 1 shows a different sliding bearing arrangement 1, and the shaft 10 which is forming a crank shaft 21 having main bearing journals 22 and pin bearing journals 23 can feature at least one recess area as well as the piston pin 30 can feature a recess area 17 in the sliding surface 13. Each of the main bearing journal 22 and the pin bearing journal 23 feature a cylindrical surface 13, and the journals 22 and 23 form the inner bearing part 12 of the sliding bearing arrangement 1. The interconnection between the small eye of the connecting rod 24 and the piston 29 comprises a sliding bearing arrangement 1 with a rotary axis 16 extending parallel to the rotary axis 16 of the crank shaft 21.

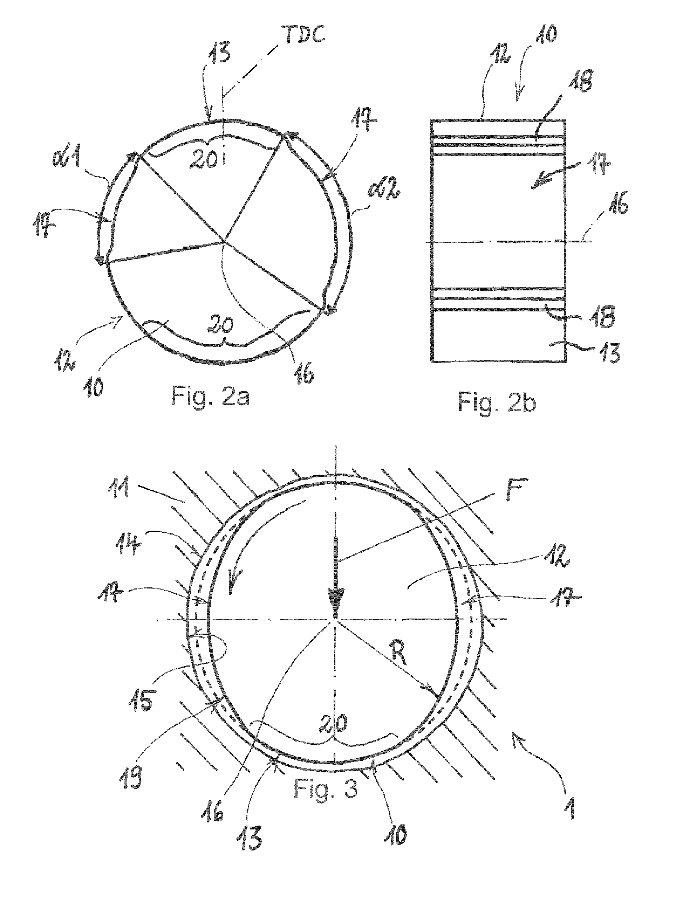

Figures 2a and 2b show an embodiment of an inner bearing part 12 formed by a shaft 10 as a part of a sliding bearing arrangement, and the inner bearing part 12 in figure 2a is depicted in a view out from the direction of the rotary axis 16 and in figure 2b the inner bearing part 12 is depicted in view sidewise to the rotary axis 16 extending horizontally in the depiction plane. The inner bearing part 12 features a surface 13, and in the surface 13 there are two recess areas 17 located. The recess areas 17 feature an angle of extension, described with α1 and α2, and the embodiment shows α1 with a circumferential angle of 55° and α2 is shown with a circumferential angle of 95°.

In figure 2a the top dead center TDC is depicted in the 12 o'clock position of the cross section of the inner bearing part 12, and with respect to the top depth center TDC the recesses 17 are arranged on the left and on the right side lateral to the top dead center TDC. These lateral sections, where the recess areas are applied, form low pressure sections, but in the section of the top dead center TDC and the section opposite to the top dead center TDC, the so called bottom dead center (not references in the figure), form pressure load areas 20, where the sliding surface 13 is needed to transmit high load between the inner bearing part 12 and an outer bearing part.

Figure 2b shows the inner bearing part 12 with the recess areas 17 on the right side of the rotary axis 16 as shown in figure 2a, and the transition of the recess area 17 into the untreated surface 13 feature a sequence of radii 18, and effected by the sequence of radii 18 the stress concentration on the edge of the surface 13 transiting into the recess area 17 is minimized.

The recess area 17 extents over the entire width of the bearing part 12 and features a depth of e.g. 0,1mm. The bottom surface of the recess area 17, as shown in figure 2a, is formed with a cylindrical surface and compared to the cylindrical surface of the untreated sliding surface 13 lateral to the recess area 17, as determined with the high pressure areas 20, the diameter of the surface is only reduced in order to extinguish the hydrodynamic pressure by increasing the clearance between the sliding partners in the tribological system. The recess area 17 can be achieved by cutting machining, etching machining, electrical discharge machining, forging, coating or any other form of material removal, material addition or plastic deformation. The clearance in between the sliding surface 13 and 15 of a sliding bearing arrangement 1 is explained in conjunction with the following figure 3.

Figure 3 shows a cross section of a sliding bearing arrangement 1 for supporting a shaft 10 in a support element 11, comprising an inner bearing part 12 with a sliding surface 13 and comprising an outer bearing part 14 with a sliding surface 15. The inner bearing part 12 is formed by the shaft 10 and the outer bearing part 14 is formed by a bore in the support element 11. When the shaft 10 is rotating in a rotary axis 16 the sliding surface of the inner bearing part 12 performs a sliding movement in contact against the sliding surface 15 of the outer bearing part 14.

According to this embodiment, the recess areas 17 are formed by an area of a continuous varying radius R of the inner bearing part 12. This design of the recess areas 17 lead to an elliptic shape 19 of the inner bearing part 12. The unaffected shape of a round inner bearing part 12 is depicted with a dashed circle.

The recess areas are disposed in regions with less hydrodynamic pressure, and when the bearing arrangement 1 is stressed by the force F, this load is transmitted by a pressure load area 20. The recess areas 17 are arranged lateral to the pressure load area 20, whereas the load can be time-varying over the revolution of the shaft 10 in the rotary axis 16. Accordingly, the positions, where the recess areas 17 are applied, are defined with respect to the time-varying load, and the sliding bearing arrangement 1 may transfer the load between the shaft 10 and the support element 11 by pressure load areas 20, which depend on the rotation position of the shaft 10 in the support element 11. Only when the pressure load area 20 is positioned in the line of influence of the force F, the force F arises for stressing the sliding bearing arrangement 1.

Due to the distance increasing of the surface 13 of the inner bearing part 12 from the surface 15 of the outer bearing part 14, the power loss of the sliding bearing arrangement 1 due to friction in the tribological system is minimized. In the following, different applications are shown, where a sliding bearing arrangement 1 with the features of the present invention can be applied.

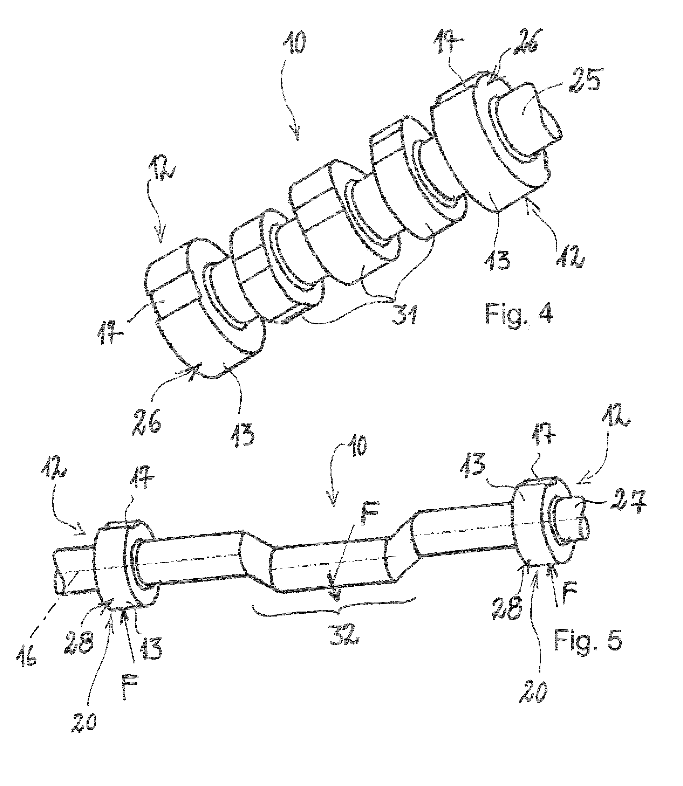

Figure 4 shows a shaft 10 which is performed as a cam shaft 25 with a number of cams 31, which are arranged on the camp shaft 25.

The cam shaft 25 features bearing rings 26 which form inner bearing parts 12 of a sliding bearing arrangement according to the present invention, when the cam shaft 25 is arranged in a cylinder head of an internal combustion engine. In the surface 13 of the inner bearing parts 12 recess areas 17 are applied. The circumferential position of the recess areas 17 correlate to the rotatory position of the cams 31. The recess areas 17 are determined in rotary positions where the hydrodynamic pressure between the shown inner bearing part 12 formed by the bearing rings 26 and an outer bearing part, which can be formed by the cylinder head, is minimal.

Figure 5 shows another embodiment of applying a sliding bearing arrangement 1 according to the present invention, and the embodiment shows a Lanchester balancer 27. The Lanchester balancer 27 forms a shaft 10 with an offset section 32, and the Lanchester balancer 27 can be applied in an internal combustion engine. In order to support the Lanchester balancer 27, bearing rings 28 are arranged on the shaft 10, and in the surface 13 of the bearing rings 28 recess areas 17 are applied.

When the Lanchester balancer 27 rotates in the rotary axis 16, an inertia force F is induced due to the offset section 32. In order to support this force with a continuous changing angle over the revolution of the Lanchester balancer 27, in the bearing rings 28 a counter-force F is induced. This counter-force F is positioned opposite to the recess areas 17, and only in the section where the counter-force F arises, the bearing ring 28 must transmit a force, and thus this position forms the pressure load area 20.

The present invention is not limited to the embodiment described above, which are represented as an example only and can be modified in various ways within the scope of protection defined by the depending patent claims.

### List of numerals

- 1: sliding bearing arrangement
- 10: shaft
- 11: support element
- 12: inner bearing part
- 13: sliding surface
- 14: outer bearing part
- 15: sliding surface
- 16: rotary axis
- 17: recess area
- 18: sequence of radii
- 19: elliptic shape
- 20: pressure load area
- 21: crank shaft
- 22: journal
- 23: journal
- 24: connecting rod
- 25: cam shaft
- 26: bearing ring
- 27: Lanchester balancer
- 28: bearing ring
- 29: piston
- 30: piston pin
- 31: cam
- 32: offset section
- α1: angle
- α2: angle
- R: continuous varying radius
- F: force
- TDC: Top Dead Center

## Claims

1. A sliding bearing arrangement (1) for supporting a shaft (10) in a support element (11), comprising an inner bearing part (12) with a sliding surface (13) and comprising an outer bearing part (14) with a sliding surface (15), whereas when the shaft (10) is rotating around an axis (16), the sliding surface (13) of the inner bearing part (12) performs a sliding movement relative to the sliding surface (15) of the outer bearing part (14), **characterized in that** at least one of the sliding surfaces (13, 15) features at least one recess area (17) extending in a circumferential direction of the surface (13, 15) over a circumferential angle (α1, α2) and which is extending over at least 50% of the axial length of the sliding surface (13, 15), and the recess area (17) is dimensioned in such a way that over the recess area (17) the clearance distance between the inner bearing part (12) and the outer bearing part (14) is increased.

2. A sliding bearing arrangement (1) according to claim 1, **characterized in that** at least one of the sliding surfaces (13, 15) of the inner bearing part (12) and/or of the outer bearing part (14) features a defined axial length along the rotation axis (16), whereas the at least one recess area (17) is formed substantially over the entire axial length of the sliding surfaces (13, 15).

3. A sliding bearing arrangement (1) according to claim 1 or 2, **characterized in that** in at least one of the sliding surfaces (13, 15) are arranged two recess areas (17), in particular opposing each other.

4. A sliding bearing arrangement (1) according to one of the previous claims, **characterized in that** at least one recess area (17) features a depth of at least 0,005 mm and preferably of at least 0,1 mm relating to the original sliding surface (13, 15).

5. A sliding bearing arrangement (1) according to one of the previous claims, **characterized in that** the circumferential directed transition of the recess areas (11) into the surface (13, 15) features a spline (18).

6. A sliding bearing arrangement (1) according to one of the claims 1 to 4, **characterized in that** at least one recess area (17) is formed by an area of a continuous varying radius (R) of the inner bearing part (12) or the outer bearing part (14), whereas the recess area (17) formed by the area of a continuous varying radius (R) preferably leads to an elliptic shape (19) of the inner bearing part (12) or the outer bearing part (14).

7. A sliding bearing arrangement (1) according to one of the previous claims, **characterized in that** at least one of the surfaces (13, 15) features a pressure load area (20) performed for transferring a force (F) between the shaft (10) and the support element (11), whereas at least one recess area (17) is located lateral to the pressure load area (20) and/or the pressure load area (20) is located in between two recess areas (17).

8. A sliding bearing arrangement (1) according to one of the previous claims, **characterized in that** the angle (α1, α2) of the circumferential extension of at least one of the recess areas (17) range from 20° to 180°, preferred from 40° to 160° and most preferred from 50° to 95°.

9. A sliding bearing arrangement (1) according to one of the previous claims, **characterized in that** the shaft (10) forms a crank shaft (21) of a crank drive, in particular of an internal combustion engine, a compressor or a pump, whereas the inner bearing part (12) is formed by a journal (22, 23) of the crank shaft (21).

10. A sliding bearing arrangement (1) according to one of the previous claims, **characterized in that** the housing (11) forms a connecting rod (24) of a crank drive, in particular of an internal combustion engine, a compressor or a pump, whereas the outer bearing part (14) is formed by a big end or small end of connecting rod (24).

11. A sliding bearing arrangement (1) according to claim 9 or 10, **characterized in that** the journal (22) of the crank shaft (21) forms a main journal (22) for supporting the crank shaft (21) in a crank housing and/or the journal (23) of the crank shaft (21) forms a pin journal (23) for connecting the crank shaft (21) to a connecting rod (24).

12. A sliding bearing arrangement (1) according to one of the claims 1 to 8,
**characterized in that** the shaft (10) forms a cam shaft (25) of an internal combustion engine, a compressor or a pump, whereas the inner bearing part (12) is formed by a bearing ring (26) of the cam shaft (25).

13. A sliding bearing arrangement (1) according to one of the claims 1 to 8, **characterized in that** the shaft (10) forms a Lanchester balancer (27) of an internal combustion engine, whereas the inner bearing part (12) is formed by a bearing ring (28) of the Lanchester balancer (27).
